Europäisches Patentamt

European Patent Office

Office européen des brevets

(11) Veröffentlichungsnummer: **0 087 488**
**B1**

(12) **EUROPÄISCHE PATENTSCHRIFT**

(45) Veröffentlichungstag der Patentschrift:
**19.06.85**

(21) Anmeldenummer: **82101565.8**

(22) Anmeldetag: **01.03.82**

(51) Int. Cl.⁴: **A 01 F 12/44**

(54) Reinigungsvorrichtung für Mähdrescher.

(43) Veröffentlichungstag der Anmeldung:
**07.09.83 Patentblatt 83/36**

(45) Bekanntmachung des Hinweises auf die Patenterteilung:
**19.06.85 Patentblatt 85/25**

(84) Benannte Vertragsstaaten:
**BE DE FR GB IT SE**

(56) Entgegenhaltungen:
**DD - A - 152 892
DE - B - 2 405 207
FR - A - 1 176 576**

(73) Patentinhaber: **DEERE & COMPANY, 1 John Deere
Road, Moline Illinois 61265 (US)**

(72) Erfinder: **Glaser, F., Dipl.-Ing. Dr., Brandenburgstrasse 3,
D-6660 Zweibrücken (DE)**

(74) Vertreter: **Sartorius, Peter et al, DEERE & COMPANY
European Office, Patent Department
Postfach 503 Steubenstrasse 36-42,
D-6800 Mannheim 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Reinigungsvorrichtung für Mähdrescher mit mindestens einer Vorrichtung zum Weiterleiten von Erntegut auf deren Oberfläche mehrere, untereinander einen Abstand aufweisende und aufrechtstehende Führungsleisten angeordnet sind.

Es ist bereits ein nach dem Axialflußprinzip abeitender Mähdrescher mit einer Reinigungsvorrichtung bekannt (DE-A-30 27 496), die mit einem Zuführboden ausgerüstet ist, auf dem zahlreiche parallel zueinander verlaufende Führungsleisten angeordnet sind, die mit Bezug auf die Auslaßseite des Zuführbodens konvergierend verlaufend angeordnet sind, damit das von einer sich in Axialrichtung erstreckenden Dresch- und Trennvorrichtung abgegebene Erntegut etws zur Mitte zusammengeführt wird, da bei einem derartigen Mähdrescher der größte Anteil des Erntegutes im Bereich der Außenseite des Zuführbodens auf den Zuführboden abgegeben wird.

Ferner ist ein Mähdrescher mit einer Reinigungsvorrichtung bekannt (DE-B-24 05 207), die ebenfalls mit einem Zuführboden ausgerüstet ist, auf dem zahlreiche, parallel zueinander verlaufende sich in etwa über die gesamte Länge des Zuführbodens erstreckende Führungsleisten vorgesehen sind. Die beiden äußeren Führungsleisten sind etwas kürzer ausgebildet als die mittleren Führungsleisten, wobei der Abstand zwischen der äußeren Führungsleiste und der angrenzenden Führungsleiste im Bereich der Einlaßseite kleiner ist als im Bereich der Auslaßseite. Die auf dem Zuführboden angeordneten Führungsleisten gewährleisten jedoch nicht eine gleichmäßige Verteilung des Erntegutes über die gesamte Breite des Zuführbodens.

Demgegenüber liegt der Erfindung die Aufgabe zugrunde, die Führungsleisten derart anzuordnen, daß auch bei größerer Konzentrierung von Erntegut im mittleren Bereich der Vorrichtung zum Weiterleiten von Erntegut eine gleichmäßige Verteilung des Erntegutes über die gesamte Breite, insbesondere am Abgabeende der Vorrichtung gewährleistet wird. Diese Aufgabe ist dadurch gelöst worden, daß zumindest die mittleren auf der Oberfläche der Vorrichtung zum Weiterleiten von Erntegut angeordneten Führungsleisten mit Bezug auf die Förderrichtung des Erntegutes und auf die Längsachse der Vorrichtung divergierend verlaufend angeordnet sind. Durch die vorteilhafte Anordnung der Führungsleisten, kann das in der Mitte der Vorrichtung angesammelte Erntegut, insbesondere im Aufgabebereich allmählich wieder nach außen geleitet werden, so daß insbesondere im Abgabebereich der Vorrichtung eine gleichmäßige Verteilung des Erntegutes über die gesamte Breite der Vorrichtung erfolgt, so daß auch eine anschließende Vorrichtung, insbesondere ein Sieb gleichmäßig mit Erntegut beaufschlagt werden kann, um somit eine gute Siebwirkung zu erzielen. Durch die gleichmäßige Erntegutverteilung auf der Sieboberfläche wird der Erntegutverlust reduziert und eine bessere Trennung des Erntegutes von den Stroh- und Schmutzpartikeln erzielt. Dabei ist es vorteilhaft, daß der Abstand zwischen jeweils zwei Führungsleisten an der Einlaßseite der Vorrichtung kleiner ist als der Abstand an deren Auslaßseite. Vorteilhaft ist es auch, daß die Abstände an der Einlaßseite zwischen jeweils zwei Führungsleisten von der Außenseite zur Längsmittelachse hin abnehmen. Da insbesondere im Aufgabebereich der Vorrichtung eine starke Konzentrierung des Erntegutes in der Mitte der Vorrichtung erfolgen kann, ist es vorteilhaft, daß die Abstände zwischen den einzelnen Führungsleisten in diesem Bereich kleiner sind als im Abgabebereich der Führungsleisten. Hierzu ist es ferner vorteilhaft, daß die Abstände zwischen den einzelnen Führungsleisten an der Auslaßseite gleich groß sind und daß die Abstände der Führungsleisten an der Auslaßseite gleich den Abständen von Führungsleisten im Bereich der Einlaßseite eines nachgeschalteten Siebes zur Aufnahme des Erntegutes sind. Durch die gleichmäßigen Abstände der einzelnen Führungsleisten kann ohne weiteres eine weitere Vorrichtung, insbesondere ein Sieb mit Führungsleisten angeschlossen werden, deren Führungsleisten normalerweise parallel zueinander verlaufen und einen gleichmäßigen Abstand untereinander aufweisen. Dadurch wird sichergestellt, daß die Zwischenräume der Vorrichtung zum Weiterleiten des Erntegutes mit den Zwischenräumen der nachgeschalteten Vorrichtung korrespondieren.

Nach einem weiteren Merkmal der Erfindung ist es vorteilhaft, daß die Vorrichtung zum Weiterleiten von Erntegut als Zuführboden ausgebildet und im Bereich des Abgabeendes einer querverlaufenden Dreschtrommel vorgesehen ist und alle Führungsleisten divergierend verlaufend angeordnet sind, wobei die einzelnen Führungsleisten mit Bezug auf die Läangsmittelachse symmetrisch ausgerichtet sind. Es ist besonders vorteilhaft, wenn die Führungsleisten insbesondere bei einem Zuführboden verwendet werden, da dieser zuerst mit Erntegut beaufschlagt wird und auf ihm eine Konzentrierung des Erntegutes in der Mitte des Zuführbodens auftreten kann. Durch die einzelnen Führungsleisten des Zuführbodens wird also, insbesondere am Abgabeende, eine gleichmäßige Gutsverteilung auf der gesamten Breite gewährleistet.

Nach einem weiteren Merkmal der Erfindung ist es vorteilhaft, daß zumindest die mittlere und die beiden äußeren Führungsleisten parallel zur Außenkante des Zuführbodens verlaufen. Vorteilhaft ist es außerdem, daß beiderseits der Längsmittelachse des Zuführbodens mindestens je zwei parallel zueinander verlaufende Führungsleisten vorgesehen sind, wobei die Führungsleisten auf der einen Seite der Längsmittelachse divergierend zu den Führungsleisten auf der anderen Seite der Längsmittelachse verlaufen. Außerdem ist es vorteilhaft, daß die jeweils außenliegende und die daran angrenzende Führungsleiste mit Bezug auf die Bewegungsrichtung des Erntegutes auf dem Zuführboden konvergierend verlaufend angeordnet sind.

Nach einem weiteren Merkmal der Erfindung ist es vorteilhaft, daß alle divergierend verlaufend angeordneten Führungsleisten sich über die gesamte Länge des Zuführbodens erstrecken und nur die beiden außenliegenden Führungsleisten kürzer sind als die innenliegenden Führungsleisten. Da die divergierend verlaufenden Führungsleisten sich über die gesamte Länge des Zuführbodens erstrecken, kann insbesondere im Abgabebereich des Zuführbodens eine gleichmäßige Verteilung des Erntegutes auf dem Zuführboden erfolgen.

In der Zeichnung sind zwei Ausführungsbeispiele einer Vorrichtung zum Weiterleiten von Erntegut schematisch dargestellt. Es zeigt

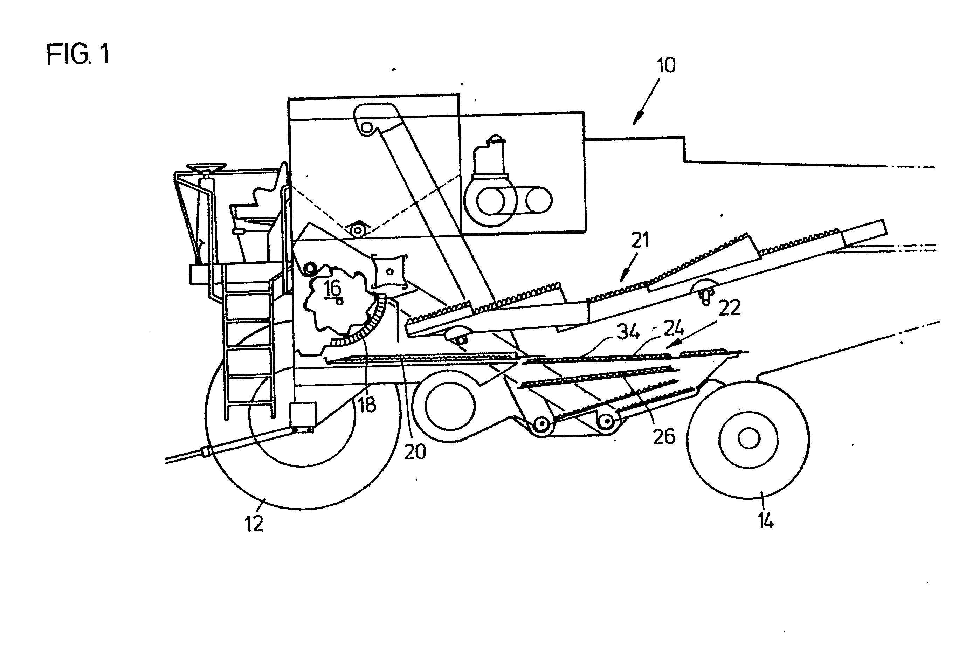

Fig. 1 eine schematische Darstellung eines Mähdreschers des erfindungsgemäßen Zuführbodens in Seitenansicht;

Fig. 2 eine Draufsicht eines Zuführbodens;

Fig. 3 ein weiteres Ausführungsbeispiel eines Zuführbodens.

In der Zeichnung ist mit 10 ein Mähdrescher bezeichnet, der mit vorderen Laufrädern 12 und hinteren steuerbaren Laufrädern 14 ausgerüstet ist. An der Vorderseite des Mähdreschers 10 ist eine in der Zeichnung nicht dargestellte Erntebergungsvorrichtung mit einem Schrägfördergehäuse anschließbar, über das das Erntegut einer Dreschtrommel 16 zugeführt wird. Die Dreschtrommel 16 wirkt mit einem Dreschkorb 18 zusammen, durch den das ausgedroschene Erntegut bewegt und auf einem Zuführboden 20, der auch als Staffelboden bezeichnet werden kann, abgegeben wird. Oberhalb des Zuführbodens 20 befindet sich ein Hordenschüttler 21 und unterhalb des Hordenschüttlers eine Reinigungsvorrichtung 22 mit Reinigungssieben 24 und 26.

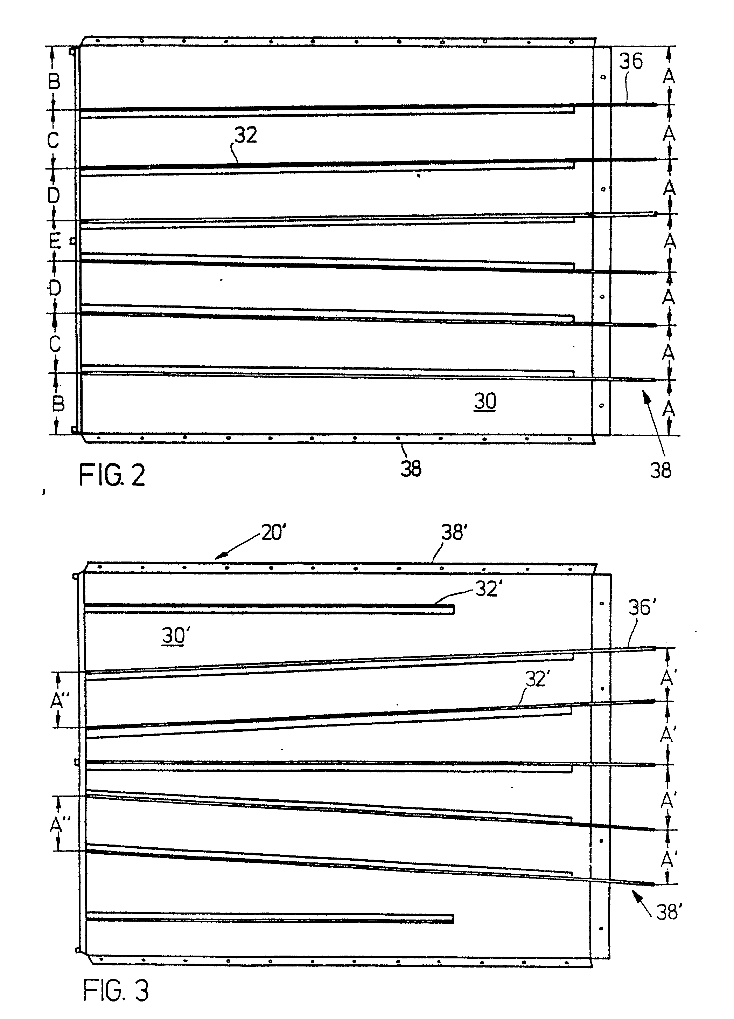

Wie insbesondere aus Fig. 2 und 3 hervorgeht, besteht der Zuführboden 20 aus einem Boden 30, der gewellt sein kann und auf dem zahlreiche untereinander einen Abstand aufweisende Führungsleisten bzw. Hangleisten 32 angeordnet sind. Die Führungsleisten 32 können aus einem L-Winkelträger gebildet sein, wobei der eine Schenkel des Winkelträgers der Führungsleiste 32 mit der Oberfläche des Bodens 30 über Nieten, Schraubenbolzen oder über Punktschweißung fest verbunden ist.

Wie aus Fig. 2 hervorgeht, erstrecken sich alle Führungsleisten 32 über die gesamte Länge des Zuführbodens 20 und sind divergierend verlaufend angeordnet. Die einzelnen Führungsleisten 32 weisen daher mit Bezug auf die Förderrichtung des Erntegutes auf den Zuführboden 20 im Bereich der Einlaßseite untereinander einen kleineren Abstand auf als im Bereich der Auslaßseite des Zuführbodens. Eine Ausnahme bildet nur die äußere Sektion auf jeder Seite. Die einzelnen Abstände zwischen den Führungsleisten 32 sind durch die Buchstaben A bis E gekennzeichnet. Aus Fig. 2 geht ferner hervor, daß der Abstand E zwischen den beiden mittleren Führungsleisten kleiner ist als die Abstände D und C der an die mittleren Führungsleisten angrenzenden Führungsleisten 32. Der Abstand B zwischen der außenliegenden Führungsleiste 32 und der Außenkante des Zuführbodens 20 ist jeweils größer als die Abstände A, D, C und E zwischen den innenliegenden Führungsleisten 32. Der Abstand A zwischen der Außenkante des Zuführbodens 20 und der angrenzenden Führungsleiste 32 kann auch größer oder kleiner als die übrigen Abstände A zwischen den Führungsleisten sein. Ebenso können die beiden Abstände A zwischen den drei mittleren Führungsleisten 32 größer sein als die übrigen Abstände A zwischen den Führungsleisten 32.

Eine auf der Außenkante des Zuführbodens 20 liegende Leiste 38, die ein Teil des Rahmens des Zuführbodens bildet, kann die gleiche Höhe wie die mittleren Zuführungsleisten 32 aufweisen und dazu beitragen, daß das Erntegut auf dem Zuführboden 20 verbleibt und in Richtung des Abgabeendes weitergeleitet wird.

Die Abstände A der einzelnen Führungsleisten 32 im Bereich der Auslaßseite des Zuführbodens können gleich groß sein, so daß die Abstände A zwischen den Führungsleisten 32 an die Abstände von Führungsleisten 34 des nachgeschalteten Siebes 24 der Reinigungsvorrichtung 22 ohne weiteres angepaßt werden können. Die Führungsleisten des Siebes 24 weisen normalerweise im Einlaßbereich untereinander einen gleichmäßigen Abstand auf. Die einzelnen Führungsleisten 34 können auch parallel zueinander verlaufen. Da die Abstände A der divergierend verlaufenden Führungsleisten 32 auf dem Zuführboden 20 im Bereich der Auslaßseite des Zuführbodens 20 so gewählt sind, daß die den Abständen der Führungsleisten 34 des nachgeschalteten Siebes 24 entsprechen, ist ein einwandfreier Weitertransport des Erntegutes möglich. Durch diese Anordnung wird bereits im Aufgabebereich des Siebes 24 eine gleichmäßige Verteilung des Erntegutes über die gesamte Breite des Siebes gewährleistet, so daß eine wirkungsvolle Reinigung des Erntegutes mittels der Siebe erfolgen kann. Durch die Führungsleisten 32 und 34 wird also sichergestellt, daß auch bei Querneigung des Mähdreschers 10 eine gleichmäßige Erntegutverteilung auf dem Zuführboden 20 insbesondere im Abgabebereich und auf der gesamten Länge des nachgeschalteten Siebes erfolgt.

In einem weiteren Ausführungsbeispiel gemäß Fig. 3 sind nur die mittleren Führungsleisten 32' divergierend verlaufend auf dem Boden 30' angeordnet. Die mittlere Führungsleiste 32' verläuft auf der Längsmittelachse des Zuführbodens 20' und somit parallel zur Außenkante des Zuführbodens. Die beiden jeweils an die mittlere Führungsleiste 32' rechts und links angrenzenden Führungsleisten 32' verlaufen divergierend zueinander, das heißt, das Einlaßende der Führungsleiste 32' weist zur angrenzenden mittleren Führungsleiste einen kleineren Abstand auf als das Auslaßende der Führungsleiste zum Auslaßende der mittleren Führungsleiste 32'. Wie aus Fig. 3 ferner hervorgeht, können jeweils die beiden an die mittlere Führungsleiste angrenzenden Führungsleisten 32' über die gesamte Länge des Zuführbodens 20' einen gleichmäßigen Abstand untereinander aufweisen. Die der Außenkante des Zuführbodens 20' am nächstgelegenen Führungsleiste 32' verläuft parallel zur Außenkante des Zuführbodens 20' und ist etwas kürzer als die Gesamtlänge des Zuführbodens. Das Abgabeende der außenliegenden Führungsleiste 32' kann zum Abgabeende des Zuführbodens 18' einen Abstand aufweisen, der in etwa einem Viertel der Gesamtlänge des Zuführbodens entspricht. Durch die vorteilhafte Anordnung der außenliegenden Führungsleisten 32' ergibt sich im Einlaßbereich des Zuführbodens 32' zwischen der außenliegenden Führungsleiste 32' und der benachbarten Führungsleiste 32' ein Abstand, der größer ist als der Abstand am Abgabebereich dieser beiden Führungsleisten 32', das heißt, die außenliegende Führungsleiste 32' verläuft konvergierend zur benachbarten Führungsleiste 32'.

Durch die vorteilhafte Anordnung der Führungsleisten 32' gemäß Fig. 3 ergibt sich, daß auch eine gleichmäßige Erntegutverteilung im Bereich des Auslaßendes des Zuführbodens 20' gewährleistet wird, wenn lediglich die mittleren Führungsleisten 32' divergierend verlaufend angeordnet sind.

Am Abgabeende der innenliegenden Führungsleisten 32 und 32' sind Zinken 36 bzw. 36' vorgesehen, die untereinander einen Fingerrechen 38, 38' bilden und die gewährleisten, daß ein Teil des Erntegutes etwas hinter der Einlaßkante des nachgeschalteten Siebes 24 auf die Oberfläche des Siebes auftrifft.

## Patentansprüche

1. Reinigungsvorrichtung (22) für Mähdrescher (10) mit mindestens einer Vorrichtung zum Weiterleiten von Erntegut auf deren Oberfläche mehrere, untereinander einen Abstand aufweisende, aufrechtstehende Führungsleisten (32, 32') sind, dadurch gekennzeichnet, daß zumindest die mittleren, auf der Oberfläche der Vorrichtung zum Weiterleiten von Erntegut angeordneten Führungsleisten (32, 32') mit Bezug auf die Förderrichtung des Erntegutes und auf die Längsachse der Vorrichtung divergierend verlaufend angeordnet sind.

2. Reinigungsvorrichtung nach Anspruch 1, dadurch gekennzeichnet, daß der Abstand (B bis E) zwischen jeweils zwei Führungsleisten (32) an der Einlaßseite der Vorrichtung kleiner ist als der Abstand (A) an deren Auslaßseite.

3. Reinigungsvorrichtung nach Anspruch 1, dadurch gekennzeichnet, daß die Abstände (B bis E) an der Einlaßseite zwischen jeweils zwei Führungsleisten (32) von der Außenseite zur Längsmittelachse hin abnehmen.

4. Reinigungsvorrichtung nach Anspruch 1 und 2, dadurch gekennzeichnet, daß die Abstände (A, A') zwischen den einzelnen Führungsleisten (32) an der Auslaßseite gleich groß sind.

5. Reinigungsvorrichtung nach einem oder mehreren der vorherigen Ansprüche, dadurch gekennzeichnet, daß die Abstände (A) der Führungsleisten (32) an der Auslaßseite gleich den Abständen von Führungsleisten (34) im Bereich der Einlaßseite eines nachgeschalteten Siebes (24) zur Aufnahme des Erntegutes sind.

6. Reinigungsvorrichtung nach einem oder mehreren der vorherigen Ansprüche, dadurch gekennzeichnet, daß die Vorrichtung zum Weiterleiten von Erntegut als Zuführboden (20, 20') ausgebildet und im Bereich des Abgabeendes einer querverlaufenden Dreschtrommel (16) vorgesehen ist und alle Führungsleisten (32) divergierend verlaufend angeordnet sind, wobei die einzelnen Führungsleisten (32) mit Bezug auf die Längsmittelachse symmetrisch ausgerichtet sind.

7. Reinigungsvorrichtung nach einem oder mehreren der vorherigen Ansprüche, dadurch gekennzeichnet, daß zumindest die mittlere und die beiden äußeren Führungsleisten (32') parallel zur Längsaußenkante des Zuführbodens (20') verlaufen.

8. Reinigungsvorrichtung nach einem oder mehreren der vorherigen Ansprüche, dadurch gekennzeichnet, daß beiderseits der Längsmittelachse des Zuführbodens (20') mindestens je zwei parallel zueinander verlaufende Führungsleisten (32') vorgesehen sind, wobei die Führungsleisten auf der einen Seite der Längsmittelachse divergierend zu den Führungsleisten auf der anderen Seite der Längsmittelachse verlaufen.

9. Reinigungsvorrichtung nach einem oder mehreren der vorherigen Ansprüche, dadurch gekennzeichnet, daß die jeweils außenliegende und die daran angrenzende Führungsleiste (32') mit Bezug auf die Bewegungsrichtung des Erntegutes auf dem Zuführboden (20') konvergierend verlaufend angeordnet sind.

10. Reinigungsvorrichtung nach einem oder mehreren der vorherigen Ansprüche, dadurch gekennzeichnet, daß alle divergierend verlaufend angeordneten Führungsleisten (32 bzw. 32') sich über die gesamte Länge des Zuführbodens (20 bzw. 20') erstrecken.

11. Reinigungsvorrichtung nach einem oder mehreren der vorherigen Ansprüche, dadurch gekennzeichnet, daß die beiden außenliegenden Führungsleisten (32') kürzer sind als die innenliegenden Führungsleisten (32').

## Claims

1. A cleaning device (22) for a combine harvester (10) having at least one means for passing on crop material on whose surface are disposed a plurality of upstanding guide bars (32, 32') which are at a spacing from each other, characterised in that at least the middle guide bars (32, 32') which are arranged on the surface of the means for passing on crop material are arranged to extend divergently with reference to the direction of conveying movement of the crop material and the longitudinal axis of the device.

2. A cleaning device according to claim 1 characterised in that the spacing (B to E) between each two guide bars (22) is smaller at the inlet side of the device than the spacing (A) at the outlet side thereof.

3. A cleaning device according to claim 1 characterised in that the spacings (B to E) at the inlet side between each two guide bars (32) decrease from the outside towards longitudinal centre line.

4. A cleaning device according to claim 1 and claim 2 characterised in that the spacings (A, A') between the individual guide bars (32) are equal at the outlet side.

5. A cleaning device according to one or more of the preceding claims characterised in that the spacings (A) between the guide bars (32) at the outlet side are equal to the spacings between guide bars (34) in the region of the inlet side of a downstream-disposed sieve (24) for receiving the crop material.

6. A cleaning device according to one or more of the preceding claims characterised in that the means for passing on crop material is formed as a feed plate member (20, 20') and is provided in the region of the discharge end of a transversely extending threshing drum (16) and all guide bars (32) are arranged to extend divergently, wherein the individual guide bars (32) are aligned symmetrically with respect to the longitudinal centre line.

7. A cleaning device according to one or more of the preceding claims characterised in that at least the middle and the two outer guide bars (32') extend parallel to the longitudinal outside edge of the feed plate member (20').

8. A cleaning device according to one or more of the preceding claims characterised in that at least two guide bars (32') which respectively extend in parallel relationship with each other are disposed on respective sides of the longitudinal centre line of the feed plate member (20'), wherein the guide bars on one side of the longitudinal centre line extend divergently with respect to the guide bars on the other side of the longitudinal centre line.

9. A cleaning device according to one or more of the preceding claims characterised in that the respective outwardly disposed guide bar and the guide bar (32') adjoining same are arranged to extend convergently with respect to the direction of movement of the crop material on the feed plate member (20').

10. A cleaning device according to one or more of the preceding claims characterised in that all guide bars (32 and 32' respectively) which are arranged to extend divergently extend over the entire length of the feed plate member (20 or 20').

11. A cleaning device according to one or more of the preceding claims characterised in that the two outwardly disposed guids bars (32') are shorter than the inwardly disposed guide bars (32').

## Revendications

1. Ensemble de nettoyage (22) pour moissonneusebatteuse (10) comportant au moins un dispositif de transport des produits de récolte à la surface duquel plusieurs lattes de guidage (32, 32') disposées verticalement selon un certain écartement relatif sont placées, caractérisé en ce qu'au moins les lattes de guidage (32, 32') médianes, disposées sur la surface du dispositif de transport des produits de récolte, sont placées de manière à s'étendre selon une disposition divergente par rapport à la direction de transport des produits de récolte et à l'axe longitudinal du dispositif.

2. Ensemble de nettoyage suivant la revendication 1, caractérisé en ce que l'écartement (B à E) entre chaque fois deux lattes de guidage (32) est, sur le côté d'entrée du dispositif, plus petit que l'écartement (A) sur son côté de sortie.

3. Ensemble de nettoyage suivant la revendication 1, caractérisé en ce que les écartements (B à E) chaque fois entre deux lattes de guidage (32) sur le côté d'entrée diminuent depuis l'extérieur, en direction de l'axe longitudinal médian.

4. Ensemble de nettoyage suivant les revendications 1 et 2, caractérisé en ce que les écartements (A, A') entre les lattes de guidage individuelles (32) sont égaux sur le côté de sortie.

5. Ensemble de nettoyage suivant l'une quelconque des revendications précédentes, caractérisé en ce que les écartements (A) entre les lattes de guidage (32) sur le côté de sortie sont égaux aux écartements entre les lattes de guidage (34) dans la zone correspondant au côté d'entrée d'un crible (24) placé en aval pour la réception des produits de récolte.

6. Ensemble de nettoyage suivant l'une quelconque des revendications précédentes, caractérisé en ce que le dispositif de transport des produits de récolte se présente sous la forme d'une table d'alimentation (20, 20') et est prévu au voisinage de l'extrémité de déchargement d'un batteur (16) s'étendant transversalement, et en ce que toutes les lattes de guidage (32) s'étendent selon une disposition divergente, les lattes de guidage individuelles (32) étant orientées de façon symétrique par rapport à l'axe longitudinal médian.

7. Ensemble de nettoyage suivant l'une quelconque des revendications précédentes, caractérisé en ce qu'au moins la latte de guidage médiane et les deux lattes de guidage extérieures (32') s'étendent parallèlement au bord longitudinal extérieur de la table d'alimentation (20').

8. Ensemble de nettoyage suivant l'une quelconque des revendications précédentes, caractérisé en ce qu'il est prévu, de part et d'autre de l'axe longitudinal médian de la table d'alimentation (20'), chaque fois au moins deux lattes de guidage (32') disposées parallèlement l'une à l'autre, les lattes de guidage prévues d'un côté de l'axe longitudinal médian s'étendant selon une disposition divergente par rapport aux lattes de guidage prévues de l'autre côté de l'axe longitudinal médian.

9. Ensemble de nettoyage suivant l'une quelconque des revendications précédentes, caractérisé en ce que la latte de guidage (32') qui se trouve chaque fois à l'extérieur et la latte de guidage qui lui est adjacente s'étendent selon une disposition convergente par rapport à la direction de déplacement des produits de récolte sur la table d'alimentation (20').

10. Ensemble de nettoyage suivant l'une quelconque des revendications précédentes, caractérisé en ce que toutes les lattes (32 ou 32') orientées selon une disposition divergente s'étendent sur toute la longueur de la table d'alimentation (20 ou 20').

11. Ensemble de nettoyage suivant l'une quelconque des revendications précédentes, caractérisé en ce que les deux lattes de guidage (32') situées à l'extérieur sont plus courtes que les lattes de guidage (32') situées à l'intérieur.

FIG. 1

10

21

22

34  24

26

16

18

20

12

14

0 087 488

FIG. 2

FIG. 3